Europäisches Patentamt

European Patent Office

Office européen des brevets

(11) Veröffentlichungsnummer: **0 361 624**
**A1**

## (12) EUROPÄISCHE PATENTANMELDUNG

(21) Anmeldenummer: 89202460.5

(22) Anmeldetag: 26.09.89

(51) Int. Cl.5 **B60J 7/22 , B60J 1/20**

(30) Priorität: **28.09.88 DE 8812257 U**

(43) Veröffentlichungstag der Anmeldung:
**04.04.90 Patentblatt 90/14**

(84) Benannte Vertragsstaaten:
**ES GR**

(71) Anmelder: **Füllgraf, Karl-Heinz**
**Luitpoldstrasse 18**
**D-8600 Bamberg(DE)**

(72) Erfinder: **Füllgraf, Karl-Heinz**
**Luitpoldstrasse 18**
**D-8600 Bamberg(DE)**

(54) **Windabweisende Teilabdeckung für Cabriolets.**

(57) Bei diesem Bauteil handelt es sich um eine zweiteilige Abdeckung (1 + 2), die den Raum hinter den Vordersitzen bis zu den Rücksitzen oder der Trennwand zum Kofferraum etwa auf Höhe der Karosserieoberkante abdeckt. Auf der Abdeckung ist eine Scheibe (4) an Scharnieren (5) so angebracht, daß sie hinter den Kopfstützen oder Vordersitzen senkrecht aufgestellt oder auch umgeklappt werden kann. Zwei Gasdruckheber (6) halten die Scheibe in der senkrechten oder liegenden Position und unterstützen das Aufstellen.

Abbildung Nr. 4

EP 0 361 624 A1

## Windabweisende Teilabdeckung für Cabriolets

Die Erfindung bezieht sich auf eine windabweisende Teilabdeckung für Cabriolets mit oder ohne Überrollbügel oder dergleichen.

In den heutigen Cabriolets treten zwischen den Vordersitzen und den Rücksitzlehnen oder der Trennwand zum Kofferraum beim Offenfahren starke Verwirbelungen auf, die bis jetzt nur durch Windabweiser von vorne, z.B. als zusätzliche Erhöhung oder Verlängerung der Windschutzscheibe oder auf Targabügel vermieden werden sollen. Durch diese Bauteile wird der Fahrtwind tatsächlich über die Köpfe der Insassen gehoben, jedoch der Wind von hinten, die Verwirbelungen in dem Zwischenraum von Vordersitzen und hinteren Begrenzung des Fahrgastraumes bläßt kräftig weiter und macht insbesondere schnelles Fahren oder Offenfahren bei niedrigen Temperaturen nicht gerade zum Vergnügen.

Der Erfindung liegt die Vermeidung dieser Windverwirbelungen zugrunde.

Erreicht ist dieses Ziel dadurch, daß die Teilabdeckung, die den gesamten Raum hinter den Vordersitzen etwa auf Höhe der Karosserieoberkante abdeckt, mit einer senkrecht oder einen entsprechenden Neigungswinkel nach vorn oder hinten hinter den Vordersitzen oder Kopfstützen angebrachten, etwa kopfhohen Scheibe, Platte oder in einem Rahmen gehaltenen Netz versehen ist. Dieses Bauteil verhindert den Luftstrom von hinten. Außerdem wird das Fahrtwindgeräusch selbst bei hohen Geschwindigkeiten auf ein erträgliches Maß reduziert.

Dadurch, daß die Abdeckung aus festem Material besteht (Kunststoff, Metall oder Holz) schwingt sie auch bei hohen Geschwindigkeiten nicht und das Fahrzeug wird insgesamt strömungsgünstiger, was dem Kraftstoffverbrauch zugute kommt.

Die Abdeckung samt der Scheibe, Platte oder im Rahmen gehaltene Netz läßt sich leicht auf oder abbauen und entsprechend bei Nich bedarf im Kofferraum verstauen. Eine andere Ausführung, die zu groß für den Kofferraum ist, muß außerhalb des Fahrzeugs aufbewahrt werden. Sie kann auch entsprechend stabiler gebaut werden, da nicht auf allzu kleinen Abmessungen geachtet werden muß.

Die windabweisende Teilabdeckung besteht aus einer in diesem Fall zweiteiligen Platte (1 + 2), die den Ausschnitt hinter den Vordersitzen und der Rücksitzlehnen oder Rückwand etwa auf Höhe der Karosserieoberkante vollständig abdeckt. Die Größe der Platten richtet sich nach der größtmöglichen Verstellung der Vordersitze. Die Platten werden an vorhandenen oder nachträglich angebrachten Bauteilen, z.B. in diesem Fall an der Sicherheitsgurtführung und der Verdeckklappe befestigt.

Die Stabilität wird durch Verstärkungen erreicht, die sich dem Gesamtbild des Fahrzeugs anpassen. Die Teilung der Platte ist in Querrichtung zum Fahrzeug, so daß sich zwei gleich große Teile ergeben. Die Scheibe (4) ist an Scharnieren (5) so befestigt,daß sie im aufgeklappten Zustand sich direkt hinter den Kopfstützen befindet. Sie wird in beschriebener Ausführung durch zwei Gasdruckheber (6) in etwa senkrechter Position zur Abdeckung gehalten. Im eingeklappten Zustand verhindern die Gasdruckheber ein Aufstellen der Scheibe. Erst wenn ein Winkel über 20° überschritten wird, drücken die Gasdruckheber die Scheibe sanft in die Endposition. Die beiden Abdeckungshälften sind durch Scharniere verbunden, so daß sie eingeklappt werden können. Die Scheibe wird im eingeklappten Zustand von beiden Teilen als Schutz vor Verkratzung und Beschädigung umgeben.

Eine windabweisende Teilabdeckung in dieser Form und Anordnung ist im Gebrauchsmuster G 88 12 257 3 Hauptklasse B60J 7'22 Anmeldetag 28.9.88 Eintragungstag 5.1.89 Inhaber: selbst, Karl Heinz Füllgraf beschrieben. Sie bietet beim Offenfahren mit einem Cabriolet mehrere Vorteile:

1. Ein Teil der Windverwirbelung wird schon allein durch die Abdeckung vermieden.

2. Der überwiegende Teil aber durch die Scheibe, Platte oder dem im Rahmen gehaltenen Netz.

3. Unter der Abdeckung bildet sich ein neuer Stauraum, für Gepäck, für Kleidungsstücke oder sogar für ein mitgeführtes Tier.

4. Als Schutz der hinteren Sitze vor Verschmutzung und zu intensiver Sonneneinstrahlung.

5. Bei Nichtbedarf wird sie in einer speziellen Halterung im Kofferraum aufbewahrt.

Diese windabweisende Teilabdeckung ist auch für jedes geschlossene Fahrzeug zu verwenden, um bei geöffneten Fenstern keinen zu grossen Windverwirbelungen ausgesetzt zu sein und um die unter den Punkten 3 und 4 aufgeführten Vorteile auch nutzen zu können.

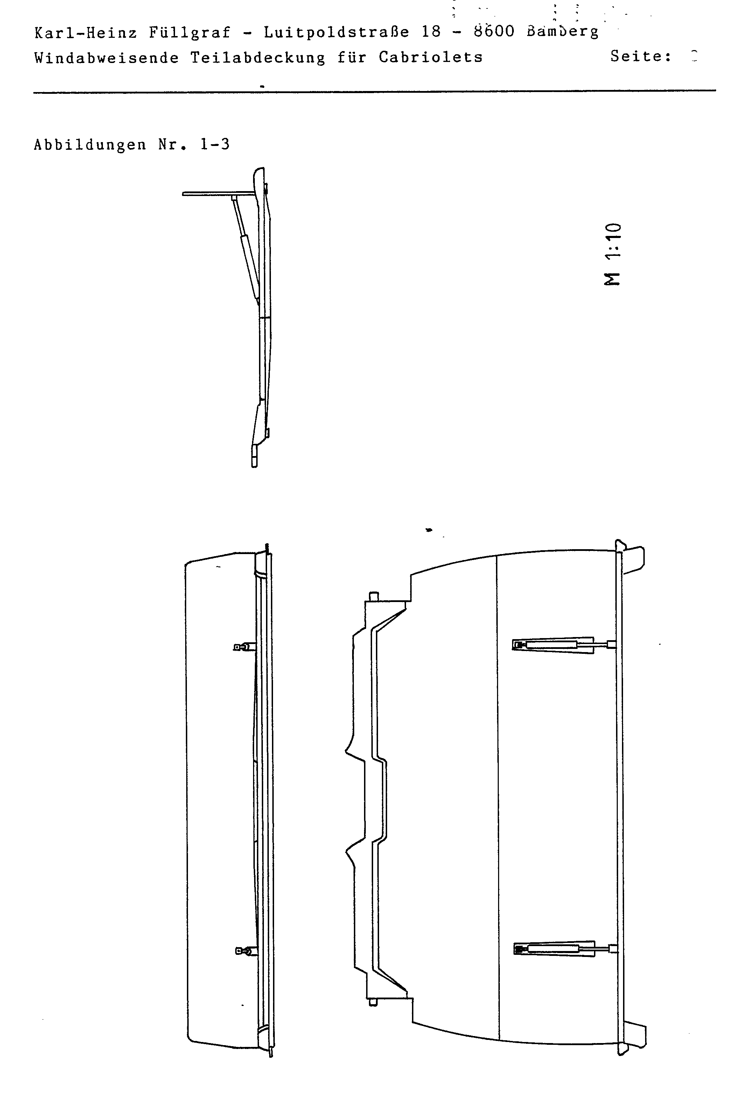

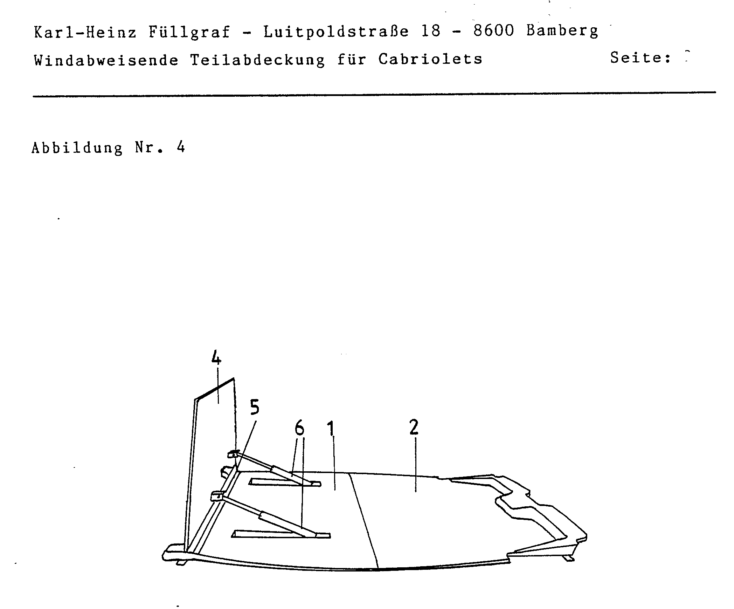

## Ansprüche

1. Windabweisende Teilabdeckung für Cabriolets mit oder ohne Überrollbügel dadurch gekennzeichnet, daß die Abdeckung aus schlagfestem Kunststoff, Metall oder Holz besteht und einer Scheibe, Platte oder aus einem umrahmten, feinmaschigen Netz, welche hinter den Vordersitzen senkrecht oder in einem gewissen Winkel nach vorne oder hinten geneigt auf der Abdeckung befestigt ist.

2. Windabweisende Teilabdeckung nach Anspruch 1

dadurch gekennzeichnet, daß sich die Scheibe, Platte oder das im Rahmen gehaltene Netz umklappen oder in einer Führung einstecken läßt.

3. Windabweisende Teilabdeckung nach Anspruch 1 und 2

dadurch gekennzeichnet, daß sich die Scheibe oder Platte oder das im Rahmen gehaltene Netz durch Einsteckteile aus den gleichen Werkstoffen zu den Seiten hin verlängern läßt.

4. Windabweisende Teilabdeckung nach Anspruch 1 - 3

dadurch gekennzeichnet, daß die Abdeckung einteilig oder mehrteilig ist.

5. Windabweisende Teilabdeckung nach Anspruch 1 - 4

dadurch gekennzeichnet, daß das Halten der klappbaren Scheibe etc. durch

5.1 eine Stütze, die mit der Abdeckplatte über eine Steckoder Schraubverbindung leicht lösbar verbunden ist und sich bei umgelegter Scheibe etc. einklappen läßt.

5.2 Federn oder Gasdruckdämpfer, die sich beim Einklappen zusammenschieben. Sie sind ebenfalls auf der Abdeckung verschraubt, versenken sich aber beim Einklappen in einen Schacht.

5.3 an der Seite der Scheibe etc. und Abdeckung angebrachte Zahnkränze, welche sich durch einfaches lösen und festziehen der Rändelmutter in verschiedenen Neigungen gehalten werden kann.

5.4 einen elektrischen Antrieb mit einem oder mehreren Elektromotoren, welche die Stützen der Scheibe etc. betätigen. Damit kann die Scheibe etc. in jeder beliebigen Stellung arretiert werden. Der elektrische Anschluß erfolgt durch eine Steckverbindung automatisch beim Auflegen der Abdeckung oder durch einen Stecker und die Betätigung durch einen entsprechenden Schalter oder einem Tempostat, der die Scheibe je nach Geschwindigkeit entsprechend aufstellt oder ausfährt.

6. Windabweisende Teilabdeckung nach Anspruch 1 - 5

6.1 dadurch gekennzeichnet, daß die Scheibe etc. in einer Hülse mit Hilfe von Zapfen eingesteckt und verriegelt wird. Dabei können die Stützen entfallen.

6.2 dadurch gekennzeichnet, daß die Scheibe etc. mit Schraubgewinden und Flügel - oder Rändelmuttern auf der Abdeckung festgezogen wird.

7. Windabweisende Teilabdeckung nach Anspruch 1 - 6

dadurch gekennzeichnet, daß an der Abdeckung ein Schacht im Winkel von etwa 90° unter der Abdeckung direkt hinter den Vordersitzen befestigt oder fest damit verbunden ist. In diesem Schacht läßt sich die Scheibe versenken. Dabei ist die Abdeckung fest oder leicht lösbar mit dem Fahrzeug verbunden.

8. Windabweisende Teilabdeckung nach Anspruch 1 - 7

8.1 dadurch gekennzeichnet, daß sich die Scheibe von Hand einund ausfahren läßt. Zwei Gasdruckheber unterstützen dabei das Ein- und Ausfahren der Scheibe etc.. Die Gasdruckheber sind unter der Abdeckung parallel zur Scheibe und bei eingefahrener Scheibe in einem Winkel von ca. 20° - 40° zur Abdeckung in etwa 6 - 10 cm Abstand zur Unterseite der Abdeckplatte an einer Halterung befestigt. An der Scheibe sind sie etwa 6 - 10 cm vom unteren Rand her befestigt. Die Gasdruckheber halten die Scheibe in der jeweiligen Endposition. An der Seite wird die Scheibe in Nuten geführt, um senkrecht zur Abdeckung zu stehen.

8.2. dadurch gekennzeichnet, daß sich die Scheibe elektrisch einund ausfahren läßt. Dabei wird das Heben und Senken der Scheibe von einem Elektromotor mit Getriebe und einem Gestänge, die unterhalb der Abdeckplatte befestigt sind, übernommen. Das Gestänge besteht aus zwei durch Zahnsegmente miteinander in Verbindung stehenden Metallprofilen. In einem dieser Zahnsegmente greift ein Zahnrad des Elektromotorgetriebes ein. Die Bewegungsrichtung der Metallprofile ist parallel zur Scheibe. Zwei in Führungsschienen, die an der Scheibe waagerecht am unteren Rand befestigt sind, gelagerte Schlitten mit Kugelkopf übertragen die Bewegungsrichtung der Metallprofile auf die Scheibe. Diese kann in jeder Position gehalten werden.

8.3. dadurch gekennzeichnet, daß sich die Scheibe elektrisch einund ausfahren läßt. Dabei wird die senkrechte Bewegungsrichtung durch einen oder zwei Elektromotorn erzeugt, die mit Gewindestangen verbunden sind. An der Scheibe sind ein oder zwei Hülsen mit Innengewinde befestigt. Durch die Drehung der Gewindestangen wird die Scheibe entweder ausgefahren, durch drehen der Gewindestange in Gegenrichtung wieder eingefahren.

Karl-Heinz Füllgraf - Luitpoldstraße 18 - 8600 Bamberg
Windabweisende Teilabdeckung für Cabriolets          Seite:  2

Abbildungen Nr. 1-3

M 1:10

Karl-Heinz Füllgraf - Luitpoldstraße 18 - 8600 Bamberg
Windabweisende Teilabdeckung für Cabriolets                Seite:

Abbildung Nr. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C-3 537 644 (FORD)<br>* Spalte 3, Zeilen 39-66; Figuren 1-4 * | 1,2,4 | B 60 J 7/22<br>B 60 J 1/20 |
| Y | | 5,7,8 | |
| | --- | | |
| Y | US-A-4 119 341 (COOK)<br>* Spalte 4, Zeilen 8-62; Figuren 1,3 * | 5,7,8 | |
| | --- | | |
| A | DE-U-1 797 558 (ALKUPLAST)<br>* Seite 2, Zeile 20 - Seite 3, Zeile 8; Figuren 1,2 * | 1,6 | |
| | --- | | |
| A | US-A-4 261 612 (CHRYSLER)<br>* Spalte 2, Zeile 56 - Spalte 3, Zeile 19; Figur 3 *<br>----- | 5 | |

**RECHERCHIERTE SACHGEBIETE (Int. Cl.5)**

B 60 J
B 62 D
F 16 F

Der vorliegende Recherchenbericht wurde für alle Patentansprüche erstellt

| Recherchenort | Abschlußdatum der Recherche | Prüfer |
|---|---|---|
| DEN HAAG | 15-12-1989 | AYITER I. |